# EUROPEAN PATENT APPLICATION

(11) **EP 2 161 171 A1**
(43) Date of publication of application: **10.03.2010**
(21) Application number: 09180187.8
(22) Date of filing: 17.10.2006
(51) Int. Cl.: B60S 1/48

(54) **Selectively controllable heated wash system**

(30) Priority: 17.10.2005 US 251952
(62) Divisional of application: 06817043.0
(71) Applicant: Valeo Electrical Systems Inc., Troy, MI 48083 (US)
(72) Inventor: Porter, Eugene, Bellbrook, OH 45305 (US); Harris, Daryl, Oxford, MI 48371 (US)
(74) Representative: Rosolen-Delarue, Katell

(57) **Abstract**

A selectively controllable heated wash system for a vehicle surface includes a wiper system control module operatively disposed in the vehicle and may be adapted to receive at least one sensed input. A fluid heating module is controlled by the wiper system control module, the heating module adapted to heat fluid therein to a predetermined target temperature, or to a preferred temperature determined as a result of recognition and analysis of the sensed input(s). Fluid is dispensed onto the surface from the heating module manually, according to predetermined parameters, or according to predetermined parameters determined at least in part as a result of recognition and analysis of the sensed input(s).

## Description

### BACKGROUND

The present disclosure relates generally to surface wash systems, and more particularly to surface wash systems incorporating heated wash fluid.

Use of heated washer fluid in conjunction with a vehicle surface cleaning system may advantageously speed the removal of ice, dirt, salt, biological matter and/or other undesirable materials from a vehicle surface. One example of a vehicle surface is a windshield.

In a current heated automatic windshield washer system, washer fluid has its temperature elevated by using engine heating or electrical heating. For example, a washer system has been developed that controls the washer fluid temperature within a range that is useful for a given application. The control of this system is either manual or automatic. In a manual system, the heated wash is applied substantially immediately upon communication of the operator's intent to wash the windshield, often by closing a normally open electrical switch. An automatic system has been developed whereby once the switch is closed, the system waits until the fluid reaches a predetermined target temperature, then washes and repeats the heating and washing cycle for a predetermined number of cycles. Although this system may be desirable in a variety of instances, it may in some cases be desirable to vary the target temperature in response to ambient conditions in the environment surrounding the system. This system has a dedicated switch separate from the vehicle washer activation switch.

In another current vehicle automatic wash system, immersion heating of wash fluid is used in conjunction with a dedicated operator input switch, separate from the vehicle's washer activation switch. The dedicated switch allows selection of either a manual wash mode or an automatic wash mode. In the automatic wash mode of this system, the wash fluid is heated to a target temperature in a reservoir in a parallel path with the unheated wash fluid. At predetermined times, the heated fluid is dispensed onto the windshield with an associated number of wipes, constituting one cycle. A fixed number of cycles follow after predetermined intervals, regardless of need and/or surrounding environment, until the system is switched back to manual wash mode. In the manual wash mode, activation of the vehicle wash system is controlled by the vehicle's washer activation switch, and the automatic wash system is bypassed.

One potential drawback with this system is that the bypassing of the automatic wash system may result in an undesirable lag time between closing the vehicle's washer activation switch and dispensing of the washer fluid. A further potential drawback is that the wash fluid in the manual (bypassing) mode is generally not heated even with sufficient time between dispensing for the fluid to be heated, since the bypassing fluid does not pass through the immersion heater. Yet another potential drawback may be that, given the number of operator controls in a vehicle, it may, in some instances, be less desirable to have more than one operator input switch controlling the washer system. Still further, another potential drawback may be that the operation of the fixed number of cycles regardless of need and/or surrounding environment may unnecessarily use washer fluid.

Thus, it would be desirable to provide a selectively controllable heated vehicle wash system that addresses one or more of the potential drawbacks enumerated above.

### SUMMARY

Embodiments of the present disclosure address one or more of the drawbacks mentioned above by providing a selectively controllable heated wash system for a vehicle surface including a wiper system control module operatively disposed in the vehicle. The control module may be adapted to receive at least one sensed input. A fluid heating module is controlled by the wiper system control module, the heating module adapted to heat fluid therein to a predetermined target temperature, or to a preferred temperature determined as a result of recognition and analysis of the sensed input(s). Fluid is dispensed onto the surface from the heating module manually, according to predetermined parameters, or according to predetermined parameters determined at least in part as a result of recognition and analysis of the sensed input(s).

The invention relates to a selectively controllable heated wash system for a surface of a vehicle, the vehicle having a single electrical operator input switch for the wash system, the switch selectively switchable to an ON state, the system comprising:
- a wiper system control module adapted to be operatively connected to the switch and adapted to sense duration of the switch in the ON state; and
- a fluid heating module adapted to heat fluid therein to a predetermined target temperature, the heating module controlled by the wiper system control module and adapted to be in fluid communication with a washer fluid reservoir;
wherein when the wiper system control module senses the duration of the switch in the ON state according to a first predetermined time pattern, fluid is dispensed once onto the surface from the heating module, whereby the system is in a manual wash mode; and wherein when the control module senses the duration of the switch in the ON state according to a second predetermined time pattern distinguishable from the first predetermined time pattern, heated fluid is dispensed onto the vehicle surface following predetermined parameters, whereby the system is in an automatic wash mode.

According to other aspects of the invention:
- The predetermined parameters include at least one of number of fluid dispenses, time interval between dispenses, target fluid temperature, or combinations thereof.
- The first predetermined time pattern is one of the switch being in the ON state less than a predetermined amount of time and the switch being in the ON state continuously more than the predetermined amount of time; and wherein the second predetermined time pattern is the other of the switch being in the ON state continuously more than the predetermined amount of time and the switch being in the ON state less than the predetermined amount of time.
- The first predetermined time pattern is the switch being in the ON state less than a predetermined amount of time, and wherein during the automatic wash mode, when the control module senses the duration of the switch in the ON state for less than the predetermined amount of time, the system exits the automatic wash mode, and further fluid dispensing is stopped.
- The predetermined target temperature ranges from about 60°C to about 70°C.
- When the system is in the manual wash mode, the dispensed fluid is at least one of fluid having a temperature at about the target fluid temperature, fluid having a temperature above the target fluid temperature, or fluid having a temperature below the target fluid temperature.
- The fluid heating module includes an integrated ambient temperature sensor.
- The vehicle has an engine, and wherein power is adapted to be supplied to the fluid heating module when the engine is on.

The invention also relates to a selectively controllable heated wash system for a vehicle surface, comprising:
- a wiper system control module adapted to be operatively disposed in the vehicle and adapted to receive at least one sensed input; and
- a fluid heating module controlled by the wiper system control module, the heating module adapted to heat fluid therein to a preferred temperature, the preferred temperature determined as a result of recognition and analysis of the at least one sensed input.

According to other aspects of the invention:
- The heated fluid is dispensed onto the surface from the heating module according to predetermined parameters determined at least in part as a result of recognition and analysis of the at least one sensed input.
- The predetermined parameters include at least one of number of fluid dispenses, duration of fluid dispensing, pressure of fluid dispensing, time interval between dispenses, number of wipes, speed of wipes, number of wash/wipe cycles, frequency of wash/wipe cycles, or combinations thereof.
- The at least one sensed input is at least one of ambient temperature, ambient humidity, ambient barometric pressure, or combinations thereof.
- The wiper system control module adjusts the preferred temperature of the fluid to substantially minimize loss of dispensed fluid to evaporation.
- The at least one sensed input is at least one of ambient temperature, ambient humidity, or combinations thereof.
- The at least one sensed input is at least one of ambient weather conditions, engine on, battery voltage, vehicle speed, traction control, reservoir fluid level, fluid temperature in the fluid heating module, or combinations thereof.
- The heated wash system comprises at least two of the at least one sensed inputs.
- The heated wash system further comprises an electrical operator input switch operatively connected to the wiper system control module, the switch selectively switchable to an ON state, wherein the control module is adapted to sense duration of the switch in the ON state, and wherein when the wiper system control module senses the duration of the switch in the ON state according to a first predetermined time pattern, fluid is dispensed once onto the surface from the heating module, whereby the system is in a manual wash mode; and wherein when the control module senses the duration of the switch in the ON state according to a second predetermined time pattern distinguishable from the first predetermined time pattern, heated fluid is dispensed onto the vehicle surface according to the predetermined parameters, whereby the system is in an automatic wash mode.
- The system is in the manual wash mode, the dispensed fluid is at least one of fluid having a temperature at about the preferred fluid temperature, fluid having a temperature above the preferred fluid temperature, or fluid having a temperature below the preferred fluid temperature.
- The electrical operator input switch is adapted to be incorporated into a single input switch for the vehicle wash system.
- The first predetermined time pattern is the switch being in the ON state less than a predetermined amount of time, and the second predetermined time pattern is the switch being in the ON state continuously more than the predetermined amount of time; and wherein during the automatic wash mode, when the control module senses the duration of the switch in the ON state for less than the predetermined amount of time, the system exits the automatic wash mode, and further fluid dispensing is stopped.
- The heated wash system further comprises an electrical operator input switch operatively connected to the wiper system control module, the switch selectively switchable between: an automatic mode whereby the heated fluid is dispensed onto the vehicle surface according to the predetermined parameters; and a manual mode whereby the operator determines the fluid dispensing.
- The wiper system control module, independently of operator input, activates or inactivates the heated fluid dispensing onto the vehicle surface according to the predetermined parameters as a result of recognition and analysis of the at least one sensed input.
- The heated wash system further comprises an operator-alerting signal generated by the wiper system control module a predetermined amount of time before heated fluid dispensing begins.
- The signal is detectable at least one of audibly, visually, tactilely, or combinations thereof.
- The vehicle has a body control module (BCM), and wherein the wiper system control module is adapted to be operatively housed within the BCM.
- The control module receives the at least one sensed input from a wireless receiver operatively connected to the vehicle.
- The at least one sensed input is generated by at least one sensor operatively connected to the vehicle.
- The vehicle includes a power train control module (PCM) and a body control module (BCM), and wherein the at least one sensor is adapted to be operatively connected to at least one of the PCM, the BCM, the wiper system control module, the fluid heating module, or combinations thereof.

The invention also concerns a method for supplying washer fluid to a vehicle surface, comprising substantially minimizing evaporative loss of supplied fluid by adjusting a temperature of the fluid as a result of recognition and analysis of at least one sensed input.

The method also comprises the following characteristics :
- The adjusting is accomplished by a selectively controllable heated wash system, comprising:
   - a wiper system control module operatively disposed in the vehicle and adapted to receive the at least one sensed input; and
   - a fluid heating module controlled by the wiper system control module, the heating module adapted to heat fluid therein to the temperature.
- The heated fluid is supplied to the surface from the heating module according to predetermined parameters determined at least in part as a result of recognition and analysis of the at least one sensed input.

### BRIEF DESCRIPTION OF THE DRAWINGS

Features and advantages of the present disclosure will become apparent by reference to the following detailed description and drawings, in which like reference numerals correspond to similar, though not necessarily identical components. For the sake of brevity, reference numerals or features having a previously described function may not necessarily be described in connection with other drawings in which they appear.
Fig. 1 is a semi-schematic perspective view of an embodiment of the selectively controllable heated wash system of the present disclosure;
Fig. 2 is a system diagram of an alternate embodiment of the selectively controllable heated wash system of the present disclosure;
Fig. 3 is a system diagram of a further alternate embodiment of the selectively controllable heated wash system of the present disclosure;
Fig. 4 is an exploded perspective view of an embodiment of a fluid heating module;
Fig. 5 is a perspective view of an embodiment of the circuit board side of the fluid heating module of Fig. 4; and
Fig. 6 is an enlarged cross-sectional view of the embodiment of the fluid heating module of Fig. 5.

### DETAILED DESCRIPTION OF THE EMBODIMENTS

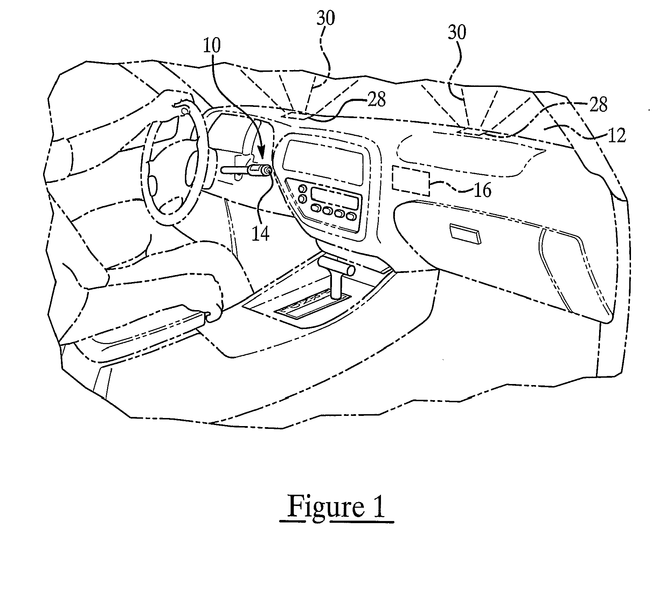

Referring now to Fig. 1, an embodiment of the selectively controllable heated wash system as disclosed herein is generally and semi-schematically designated at 10. The wash system 10 may be for use in a variety of applications, including but not limited to surface(s) 12 of a vehicle, for example an automotive windshield. In an embodiment, the vehicle has a single electrical operator input switch 14 for the wash system 10, the switch 14 selectively switchable to an ON state. It is to be understood that this system 10 (as well as system 10' described below) may be suitable for use on a variety of vehicles and vehicle surfaces, including but not limited to head lamp washer systems, vehicle rear window washer systems, train washer systems, aircraft washer systems, water vehicle washer systems, and/or the like.

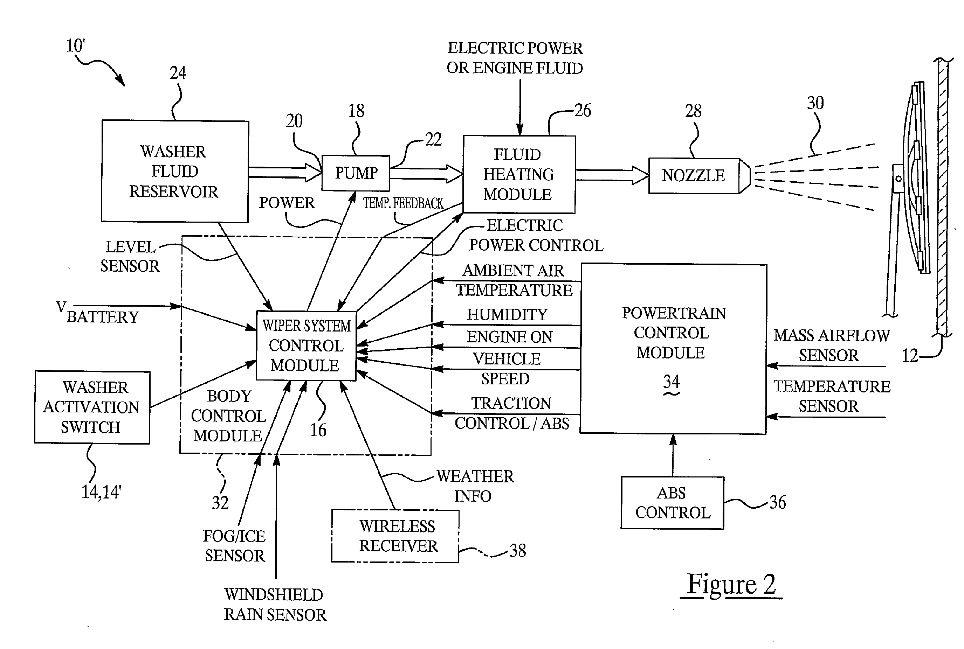

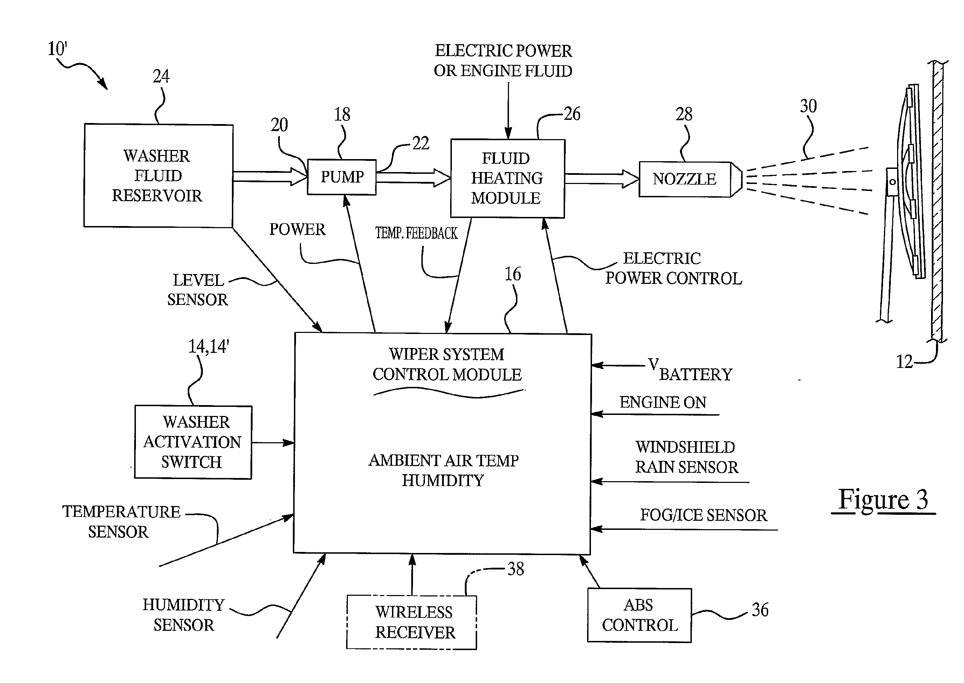

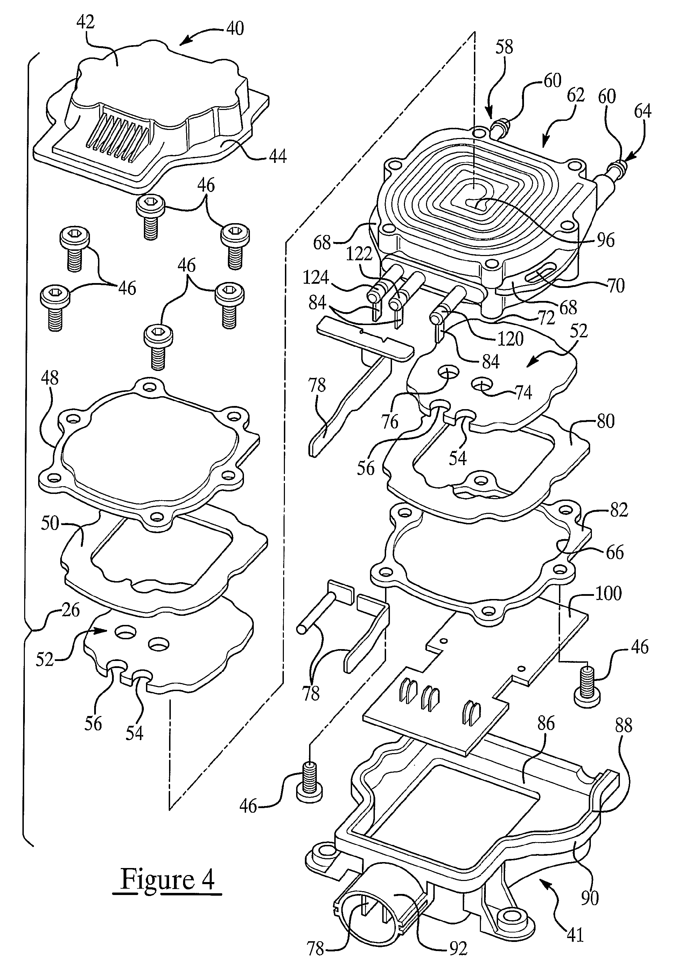

The wash system 10 includes a wiper system control module 16 adapted to be operatively connected to the switch 14 and adapted to sense duration of the switch 14 in the ON state. In an embodiment, a fluid heating module 26 (schematically shown in Figs. 2 and 3) is adapted to heat fluid therein to a predetermined target temperature, the heating module 26 controlled by the wiper system control module 16 and adapted to be in fluid communication with a washer fluid reservoir 24 (also schematically shown in Figs. 2 and 3). A non-limitative example of an embodiment of a fluid heating module 26 suitable for use in system 10 is discussed below in relation to Figs. 4-6.

In an embodiment, when the wiper system control module 16 senses the duration of the switch 14 in the ON state according to a first predetermined time pattern, fluid 30 is dispensed once onto the surface 12 from the heating module 26. This is an example of a manual mode. A non-limitative example of such a first predetermined time pattern is the switch 14 being in the ON state less than a predetermined amount of time. A further non-limitative example of such a first predetermined time pattern is the switch 14 being in the ON state more than a predetermined amount of time. Yet a further non-limitative example of such a first predetermined time pattern is the switch 14 alternating between the ON state and an OFF state a certain number of times within a predetermined amount of time.

It is to be understood that in the manual mode in this embodiment, as well as in any of the embodiment(s) discussed herein, the dispensed fluid 30 may have a temperature at about the target fluid temperature, above the target fluid temperature, or below the target fluid temperature. The temperature of the dispensed fluid 30 in the manual mode may depend on many factors, including but not limited to the time spent in the fluid heating module 26, whether power is supplied to the fluid heating module 26, ambient conditions, and/or the like.

Alternately in this embodiment, when the control module 16 senses the duration of the switch 14 in the ON state according to a second predetermined time pattern that is distinguishable from the first predetermined time pattern, heated fluid 30 is dispensed onto the vehicle surface 12 following predetermined parameters. This is an example of an automatic mode. A non-limitative example of such a second predetermined time pattern is the switch 14 being in the ON state continuously more than a predetermined amount of time. A further non-limitative example of such a second predetermined time pattern is the switch 14 being in the ON state less than a predetermined amount of time. Yet a further non-limitative example of such a second predetermined time pattern is the switch 14 alternating between the ON state and an OFF state a certain number of times within a predetermined amount of time.

As such, it is to be understood that module 16 may operate according to control logic that may distinguish between any desired operator input (including, but not limited to any desired first and second predetermined time patterns) using a single switch 14 to indicate a choice between manual and automatic mode.

In normal operation in a non-limitative embodiment, the user may choose between the two modes by pressing and releasing the usual washer activation switch 14 (manual); or pressing and continuously holding (for longer than the predetermined amount of time) the switch 14 to activate automatic mode. It is to be understood that the predetermined amount of time may be any suitable amount of time, as desired and/or for a particular application. In one non-limitative embodiment, the predetermined amount of time may range from about 2 seconds to about 5 seconds; and in a further embodiment, the time may be about 3 seconds. Using about 3 seconds as an example, the system 10 may be set to remain in manual mode if the user depresses the switch 14 less than or equal to about 3 seconds; and to switch to automatic mode after the user depresses the switch 14 continuously for more than about 3 seconds.

The system 10 may, if desired, take into account and ignore switch bounce situations wherein the switch 14 may be momentarily (for less than about 10 milliseconds) activated by various vibrations, including but not limited to such vibrations caused by rough road conditions.

In an embodiment, the automatic mode may stop automatically after a predetermined number of heated wash/wipe cycles with predetermined intervals therebetween. In an alternate embodiment, the operator may stop the automatic mode by briefly tapping the switch 14 (for less than the predetermined amount of time). That is, during the automatic wash mode (during the heated fluid dispensing following the predetermined parameters), when the control module 16 senses the duration of the switch 14 in the ON state for less than the predetermined amount of time, the system 10 exits the automatic wash mode, and further fluid dispensing is stopped. If, during the automatic wash mode, the operator taps the switch 14 during a non-fluid dispensing portion of a heated wash/wipe cycle, fluid 30 (heated, partially heated, or at ambient temperature) may be dispensed onto the surface 12 as in manual mode before/as the system 10 exits the automatic wash mode.

It is to be understood that the predetermined parameters may include any suitable parameters, as desired, including but not limited to the number of fluid dispenses, the time interval between dispenses, the target fluid temperature, and/or combinations thereof.

It is to be understood that the predetermined target temperature may be any suitable temperature. In an embodiment, the temperature may range from about 60°C to about 70°C. In an alternate embodiment, the system may be serviced during different seasons of the year (if the vehicle is in and/or traveling to a climate experiencing significant weather changes in the different seasons) to adjust the target temperature to a temperature better suited for minimizing loss of washer fluid to evaporation. It has been unexpectedly and fortuitously discovered that washer fluid may actually perform better if, generally speaking, its temperature is lower during cold temperatures and higher during warmer temperatures. This may be due, at least in part, to the fact that the greater the temperature difference between the ambient air and the washer fluid, the more washer fluid is lost to evaporation. As such, when fluid is lost to evaporation, less fluid 30 actually reaches the vehicle surface 12 to be cleaned/de-fogged/de-iced, and/or the like. One non-limitative embodiment of a predetermined target temperature suitable for colder ambient temperatures ranges from about 25°C to about 40°C.

In any of the embodiments of system 10, 10' disclosed herein, and as schematically shown in Figs. 2 and 3, a washer fluid pump 18 having an inlet 20 and an outlet 22 is controlled by the wiper system control module 16. It is to be understood that any suitable pump 18 may be used, and in any suitable location. A washer fluid reservoir 24 is in fluid communication with the pump inlet 20. Further, it is to be understood that the reservoir 24 may be any suitable reservoir 24, and in any suitable location.

The fluid heating module 26 is generally in fluid communication with the pump outlet 22 and the fluid reservoir 24 (as stated above). It is to be understood that either or both of the fluid heating module 26 and the pump 18 may be located within, substantially within, or outside of the washer fluid reservoir 24, as desired and/or as suitable for a particular application.

System 10, 10' further includes one or more dispensing nozzles 28 in fluid communication with the heating module 26. It is to be understood that nozzles 28 may be any suitable nozzles, including but not limited to fan spray nozzles, stream spray nozzles, fluidic nozzles, and/or the like, and/or combinations thereof.

It is to be understood that the terms "connected/connects/connecting to," "fluidly coupled/in fluid communication with," and/or the like are broadly defined herein to encompass a variety of divergent arrangements. These arrangements include, but are not limited to (1) the direct connection of one component to another component with no intervening components therebetween; and (2) the connection of one component to another component with one or more components therebetween, provided that the one component being "connected/ing to" and/or "in fluid communication with" the other component is somehow "supported" by the other component (notwithstanding the presence of one or more additional components therebetween).

System 10 may be advantageous in that the system 10 is relatively simple to use, and there are no extra buttons/switches necessary to activate the automatic mode of system 10 (in that system 10 is activated by the already existing wash switch 14). As such, the existence of system 10 is substantially "transparent" to the operator, with the operator able to, at will, manually or automatically control wash system 10 through a single switch 14.

In any of the embodiment(s) discussed herein, it is to be understood that fluid heating module 26 may include an integrated and/or remote fluid temperature sensor. One non-limitative example of an integrated fluid temperature sensor is temperature sensor 104, discussed further below. It is to be understood that any suitable fluid temperature sensor may be used, as well as any suitable device(s) for operatively connecting/coupling the fluid temperature sensor to the fluid heating module 26.

It is to be further understood that, in any of the embodiment(s) discussed herein, power is generally adapted to be supplied to the fluid heating module 26 when the vehicle engine is on (i.e. power generally is not supplied to module 26 when the engine is off).

Referring now more particularly to Figs. 2 and 3, an alternate embodiment of the selectively controllable heated wash system is presented and designated generally as 10'. System 10' is a partially and/or substantially fully intelligent system, adapted to respond to environmental and/or vehicle condition(s). System 10' includes a wiper system control module 16 adapted to be operatively disposed in the vehicle and adapted to receive at least one sensed input. The fluid heating module 26 is controlled by the wiper system control module 16, as in the previous embodiment; however, in this embodiment, the heating module 26 is adapted to heat fluid therein to a preferred temperature. The preferred temperature is determined as a result of recognition and analysis of one or more of the sensed input(s). An embodiment of the determination of the preferred temperature is discussed more fully below. System 10' is adapted to dispense heated fluid onto the surface 12 from the heating module 26 according to predetermined parameters determined, at least in part, as a result of recognition and analysis of one or more of the sensed input(s).

It is to be understood that the predetermined parameters may be any suitable parameters, as desired. In an embodiment, the predetermined parameters may include the number of fluid dispenses, the pressure of fluid dispensing, the duration of fluid dispensing, the time interval between dispenses, the number of wipes, the speed of wipes, and/or the like, and/or combinations thereof.

In an embodiment of system 10' which is partially intelligent, one or more of the parameters may be pre-set (for example, the number of wash/wipe cycles in automatic mode); while one or more of the other parameters may be determined, at least in part, as a result of recognition and analysis of one or more of the sensed input(s).

In an embodiment of system 10' which is substantially fully intelligent, the available parameters are generally determined, at least in part, as a result of recognition and analysis of one or more of the sensed input(s). As such, for example, the number of wash/wipe cycles may be tailored to the vehicle surface's then-current specific need for cleaning/de-fogging/de-icing. In this manner, washer fluid may be conserved, not only due to the minimizing of evaporative losses, but also due to substantially minimizing potential fluid waste if excessive fluid 30 is dispensed onto the vehicle surface 12.

Further, it is to be understood that any of a variety of inputs may be sensed (by any suitable means) and communicated (by any suitable means) to the wiper system control module 16. In an embodiment, the sensed input(s) is/are ambient weather conditions, engine on, battery voltage, vehicle speed, traction control and/or ABS information (such as from sensor 36), reservoir fluid level, fluid temperature in the fluid heating module 26, and/or the like, and/or combinations thereof. It is to be understood that the ambient ("ambient" meaning the then-current environment in which the vehicle is located) weather conditions may include information gleaned from an outside/ambient air temperature sensor, from an outside/ambient humidity sensor, from a fog/ice sensor, from a windshield rain sensor, engine control sensors, and/or from the like, and/or from combinations thereof. A non-limitative example of various sensed inputs is shown in Fig. 2.

The weather conditions may include, but are not limited to ambient temperature, ambient humidity, ambient barometric pressure, precipitation, and/or the like, and/or combinations thereof.

In an embodiment, wiper system control module 16 receives at least two sensed input(s).

It is to be understood that any or all of the sensors adapted to sense one or more of the sensed input(s) may be onboard sensors, operatively connected to the vehicle. In an alternate embodiment, the control module 16 receives one or more sensed input(s) from a wireless receiver 38 operatively connected to the vehicle. For example, weather information for the then-current location of the vehicle may be transmitted from off-board/remote sensor(s) to the wireless receiver 38. It is to be understood that wireless receiver 38 may be any suitable wireless receiving device, non-limitative examples of which include a short-range wireless communication network 38 (e.g. a Bluetooth^{®} unit), satellite radio, and/or the like, and/or combinations thereof.

As briefly discussed briefly above, it has been unexpectedly and fortuitously discovered that washer fluid may actually perform better if the ΔT (difference between ambient temperature and preferred temperature of fluid 30 dispensed) remains small enough to substantially minimize evaporative losses of washer fluid. If ambient humidity is also one of the sensed inputs, this also may factor in to determining a preferred temperature to substantially minimize evaporative losses. As such, when washer fluid evaporative losses are substantially minimized, more fluid 30 actually reaches the vehicle surface 12 to be cleaned/de-fogged/de-iced, and/or the like, while yet conserving washer fluid in the reservoir 24 (less fluid 30 may be used to perform the desired task, as less fluid 30 is lost to evaporation).

One non-limitative embodiment of a preferred washer fluid temperature suitable for colder ambient temperatures (one example of which may be from about - 20°C to about 0°C) may range from about 25°C to about 40°C; whereas for warmer ambient temperatures (one example of which may be from about 10°C to about 40°C), a preferred washer fluid temperature may range from about 60°C to about 70°C. This is quite counter-intuitive, as one would expect that the colder the ambient temperature, the warmer the washer fluid temperature should be.

In an embodiment of system 10', after the then-current preferred temperature is determined, the wiper system control module 16 adjusts the temperature of the fluid in the fluid heating module 26 to substantially minimize loss of dispensed fluid 30 to evaporation.

It is to be understood that the preferred temperature in light of the sensed input(s) may be determined in any suitable manner. In one non-limitative embodiment of system 10', an algorithm may be used to determine the preferred temperature. This algorithm may generally focus on an optimal balance between a higher temperature for enhanced cleaning efficacy, yet with substantially minimal vapor change of the fluid 30. For example, if the only input information is ambient temperature, then the algorithm may default to a predetermined value for other, non-input factors (one example of which may be ambient humidity level). In an alternate embodiment, for any factor for which the input is not currently available but had been available in the past, the algorithm may default to an "average" or "learned" value as a constant factor in the algorithm.

In an embodiment of system 10', an electrical operator input switch 14, 14' may be operatively connected to the wiper system control module 16, with the switch 14, 14' being selectively switchable to an ON state. As in the embodiment of system 10 discussed hereinabove, module 16 may operate according to control logic that may distinguish between any desired operator input (including, but not limited to any desired first and second predetermined time patterns) using a single switch 14, 14' to indicate a choice between manual and automatic mode.

In a non-limitative embodiment, the control module 16 may be adapted to sense duration of the switch 14, 14' in the ON state, and when the wiper system control module 16 senses the duration of the switch 14, 14' in the ON state is less than a predetermined amount of time, fluid is dispensed once onto the surface 12 from the heating module 26. This is an example of system 10' in a manual wash mode.

In this embodiment, when the control module 16 senses the duration of the switch 14, 14' in the ON state continuously more than a predetermined amount of time, heated fluid is dispensed onto the vehicle surface according to the predetermined parameters. This is an example of system 10' in an automatic wash mode.

In normal operation in an embodiment of system 10', the user may choose between the two modes by pressing and releasing the washer activation switch 14, 14' (manual); or pressing and continuously holding (for longer than the predetermined amount of time) the switch 14, 14' to activate automatic mode. It is to be understood that the predetermined amount of time may be any suitable amount of time (as described above in relation to that embodiment of system 10 discussed above), as desired and/or for a particular application. As in system 10, system 10' may, if desired, take into account and ignore switch bounce situations.

In an embodiment, the automatic mode may stop automatically after a predetermined number of heated wash/wipe cycles with predetermined intervals therebetween. In an alternate embodiment, the operator may stop the automatic mode by briefly tapping the switch 14, 14' (for less than the predetermined amount of time). That is, during the automatic wash mode (during the heated fluid dispensing following the predetermined parameters), when the control module 16 senses the duration of the switch 14, 14' in the ON state for less than the predetermined amount of time, the system 10' exits the automatic wash mode, and further fluid dispensing is stopped. If, during the automatic wash mode, the operator taps the switch 14, 14' during a non-fluid dispensing portion of a heated wash/wipe cycle, fluid 30 (heated, partially heated, or at ambient temperature) may be dispensed onto the surface 12 as in manual mode before/as the system 10' exits the automatic wash mode.

In an alternate embodiment of system 10' which is partially and/or substantially fully intelligent, in the automatic mode, the number and/or frequency of wash/wipe cycles, amount of fluid dispensed, etc. (i.e. one or more of the predetermined parameters) continue for as long as control module 16 determines is necessary (as discussed above), and then system 10' exits itself from the automatic mode.

Further, in an embodiment of system 10' which is substantially fully intelligent, the wiper system control module 16, independently of operator input, activates or inactivates the heated fluid dispensing onto the vehicle surface 12 according to the predetermined parameters as a result of recognition and analysis of one or more sensed input(s). As such, an electrical operator input switch may not be necessary in this embodiment and thus may be an optional component.

It is to be understood that, in embodiment(s) of system 10', the electrical operator input switch (if any) may be adapted to be incorporated into the single input switch for the vehicle wash system 14, as discussed above in relation to system 10. Alternately, the electrical operator input switch (if any) may be a discrete switch 14', separate from the conventional wash system switch 14. It is to be understood that switch 14' may be any suitable type of switch, one example being that described above. A further example of a suitable switch 14' includes a toggle switch adapted to selectively switch between: the automatic mode whereby the heated fluid is dispensed onto the vehicle surface according to the predetermined parameters; and the manual mode whereby the operator determines the fluid dispensing. The operator may indicate intent to activate the system 10, 10' in a particular mode by closing a normally open switch (as discussed above) for a predetermined time interval. Other means for indicating operator intent include, but are not limited to voice activated controls, touch screen controls, vacuum switches, hydraulic and pneumatic switches, electronic switches other than normally open switches, and/or the like, and/or combinations thereof.

In any of the embodiment(s) of system 10, 10' disclosed herein, it is to be understood that the volume of washer fluid that may be held in the fluid heating module 26 may be any suitable volume, as desired. In an embodiment, that volume may range from about 25 mL to about 150 mL. Further, in the automatic mode (in any of the operator-controlled, partially intelligent, or substantially fully intelligent embodiments), the fluid may be heated to the target/preferred temperature within any suitable time interval, as desired. In an embodiment, the heat delivered from the fluid heating module 26 to the fluid is generally sufficient to elevate the temperature of the washer fluid within module 26 to the target/preferred temperature within about 20 seconds to about 60 seconds.

In any of the embodiment(s) of system 10, 10' discussed herein, the system 10, 10' may further optionally include an operator-alerting signal generated by the wiper system control module 16 a predetermined amount of time before heated fluid dispensing begins and/or automatic wiper system operation begins. It is to be understood that the signal may be any suitable signal, as desired, and may be detectable in any suitable manner, including audibly, visually, tactilely, and/or the like, and/or combinations thereof. Further, it is to be understood that the predetermined amount of time may be any amount of time suitable to alert the operator as to the impending start of the heated fluid dispensing/automatic wiper operation. In one non-limitative embodiment, the predetermined amount of time may range from about 2 seconds to about 8 seconds.

It is to be understood that, in any of the embodiment(s) of system 10, 10' discussed herein, the wiper system control module 16 may be housed in and/or operatively connected to any suitable area/component of the vehicle. In one non-limitative embodiment as shown in Fig. 2, the wiper system control module 16 may be operatively housed within the body control module (BCM) 32. In a further non-limitative embodiment as shown in Fig. 3, the wiper system control module 16 is a separate component not housed within another component.

Further, it is to be understood that the one and/or more sensed input(s) may be generated by any suitable device and received by control module 16 in any suitable manner. In an embodiment, the sensed input(s) is/are generated by at least one sensor operatively connected to the vehicle. Figs. 2 and 3 show schematic diagrams of a variety of sensors, some examples of which include temperature sensors (both fluid temperature and ambient temperature), humidity sensors, fog/ice sensors, windshield rain sensors, mass airflow sensors, and the like. It is to be understood that the sensors shown are illustrative, and that fewer or more sensors are contemplated as being within the purview of the present disclosure. Also, it is to be understood that the sensor(s) may take direct readings of a condition(s) and/or may be able to deduce properties from a direct reading. For example, a mass airflow sensor may deduce properties of the air, such as density and the like.

Referring still to Figs. 2 and 3, it is to be understood that the one or more sensor(s) may be operatively connected to any component of the vehicle, including but not limited to the power train control module (PCM) 34, the body control module (BCM) 32, the wiper system control module 16, the fluid heating module 26, and/or the like, and/or combinations thereof. In an embodiment, an ambient temperature sensor is integrally connected with the fluid heating module 26.

In an embodiment of system 10, 10', the control module 16 may interface with the vehicle control modules and deactivate the heated wash system 10, 10' when it would be desirable for the vehicle charging system. An example when this may be desirable is if the vehicle battery has a weak charge.

A method for supplying washer fluid 30 to vehicle surface 12 according to embodiment(s) of the present disclosure includes substantially minimizing evaporative loss of supplied fluid 30 by adjusting a temperature of the fluid as a result of recognition and analysis of at least one sensed input. It is to be understood that the adjusting may be accomplished by any suitable means, including but not limited to embodiment(s) of the selectively controllable heated wash system 10' as disclosed herein.

It is to be understood that any fluid heating module 26 may be used in embodiment(s) of system 10' disclosed herein. Some examples of suitable modules 26 include those that are sequential with, i.e. generally an extension of the existing washer fluid path; those that are parallel with, i.e. including a bypass from/to the existing washer fluid path; those that utilize heat exchanger(s) (for example, utilizing scavenged heat such as engine heat, transmission heat, and/or the like); those that utilize resistive heaters; those that utilize induction heaters; those that utilize positive thermal coefficient heaters; and/or the like; and/or combinations thereof. Some non-limitative embodiment(s) of suitable fluid heating modules 26 are disclosed in U.S. Patent Publication 2005/0001058 to Shank et al., in U.S. Patent No. 6,669,109 issued to Ivanov et al., and in U.S. Patent No. 6,538,235 issued to Lopez et al., each of which is incorporated by reference herein in its entirety.

Some further, non-limitative embodiment(s) of a suitable fluid heating module 26 are described in U.S. Patent Application S.N. 10/653,005, filed August 29, 2003, which is also incorporated by reference herein in its entirety, and is described relatively briefly below.

Referring now to Figs. 4-6 together, generally speaking, one non-limitative embodiment of the fluid heating module 26 may include a thermally conductive mass 62; heating means, disposed in contact with the thermally conductive mass 62, for imparting heat thereto; a fluid flow path 114 and/or 116 formed in the mass 62 between an inlet 64 and an outlet 58, the fluid flow path 114 and/or 116 coupled in heat transfer relation to the heating means so that the fluid in the fluid flow path 114 and/or 116 absorbs heat from the thermally conductive mass 62, with the fluid flow path 114 and/or 116 open to the exterior of the thermally conductive mass 62; and an electrical ground member fixedly attached to the heating means and establishing a common ground through the heating means with the thermally conductive mass 62.

More specifically, the heater module 26 may include a heat exchange mass or body 62 formed of a suitable highly thermally conductive material. Although the mass 62' is described as being formed of die-cast, molded, and/or cast or machined aluminum, it is to be understood that other materials, either homogenous or heterogeneous, may also be employed. The use of ceramic material may form a compact, dense mass 62 of low porosity which may provide the desired high thermal conductivity between the heater elements 120, 122, 124 (described further below) mounted in the mass 62, the mass 62 itself and the fluid flowing through the mass 62.

As vehicles typically have several spray nozzles 28, usually at least one for each of the two windshield wipers, and at times, at least one nozzle 28 for the rear backlight or rear window wiper, it is to be understood that the following description of a single heater module 26 for heating all of the fluid discharge from the fluid reservoir 24 may encompass multiple parallel paths, each containing a separate heater module 26, for heating fluid from the reservoir 24 for each different nozzle 28. It is to be further understood that a single heater module 26 may also serve to heat multiple parallel paths.

The heat exchange mass 62 may be disposed within an enclosure or housing formed by a first cover 41 and a second, mating cover 40. The first and second covers 41 and 40, respectively, have complementary mating edges. The first cover 41 has a major wall surface 86 and a surrounding peripheral lip 90.

The mass 62 includes a fluid flow path between an inlet 64 and an outlet 58, as described in greater detail hereafter. The inlet and outlet 64 and 58, respectively, each includes a fitting 60 for receiving a fluid-sealed connection to a fluid flow conduit, element or tube (not shown). The inlet 64 is adapted to receive the pump output from the washer fluid reservoir 24; while the outlet 58 is fluidly connected to the spray nozzle(s) 28.

A necked-down end portion 92 may be formed in the first cover 41, forming a tubular extension from one portion of the major wall surface 86. The necked-down portion 92 forms an enclosure for receiving a connector assembly 78 which provides electrical signals and power to the heating element(s) mounted in the joined first and second covers 41 and 40 and to a circuit board, described in detail hereafter.

The second cover 40 also has a major wall surface 42 and a surrounding peripheral lip 44 projecting therefrom. The peripheral lip 44 surrounds substantially the entire periphery of the second major wall surface 42.

The first and second covers 41 and 40 are fixedly joined together, after the thermal mass 62 and the connector assembly 78, have been disposed within the first and second covers 41 and 40 by suitable means, such as by heat, sonic or vibration welding. A peripheral groove 88 may projects at least partially around the edge of the peripheral lip 90. The groove 88 receives a mating projection extending around the peripheral lip 44 of the second cover 40. The projection and groove 88 are fixedly and sealingly joined together, for example, by welding (and/or by other means of fixing, e.g. adhesives, snaps, clips, etc.), to fixedly join the covers 41 and 40.

Locating means may be provided for locating and fixing the thermal mass 62 to the first and second covers 41 and 40. At least one circumferentially spaced slot 70 and/or 94 is formed on webs 68 extending between two bosses receiving the threaded fasteners on the mass 62. The slot(s) 70, 94 receive projections carried on flanges in the first and second covers 41 and 40 at circumferentially spaced locations complementary to the location of the slots 70, 94 in the mass 62. The projections may be welded together when the covers 41 and 40 are subjected to a sonic, heat, and/or vibration welding process. In this manner, the thermal mass is fixedly positioned within the covers 41 and 40 when the covers 41 and 40 are themselves joined together.

A pair of seal elements 80 and 50, each having a general ring shape with another edge substantially the same as the peripheral shape of the heat exchange mass 62, may be disposed on opposite surfaces of the heat exchange mass 62, as shown in FIG. 4, for sealing the periphery of the heat exchange mass 62. The seal members 80 and 50 may be formed of a high thermal resistant, insulating material. In an alternate embodiment, seals 80, 50 may be eliminated, such as, for example, by suitable configuration of the fluid expansion means (the fluid expansion means 52 is discussed further below).

Upper and lower closures or plates 82 and 48, each also having a shape complementary to the shape of the heat exchange mass 62, may be disposed in contact with the upper and lower seals 80 and 50, respectively, and fixed thereto by suitable fastening means, such as nuts and bolts 46, which extend through apertures in each of the upper and lower plates 82 and 48, and peripherally located bores in heat exchange mass 62. The upper and lower plates 82 and 48 may be formed of a good thermally conductive material, such as aluminum.

One or more interior surfaces 108, 110 and 112 may be formed in the body 62 and project inwardly from the sidewall. By way of example only, the surface(s) 108, 110 and 112 each contact a generally cylindrical heater element(s) 120, 122, 124. Each surface 108, 110 and 112 generally extends through the solid central portion of the mass 62 so as to be completely surrounded by the solid material of the mass 62. This defines the mass 62 as a heat source after receiving heat from the heater elements 120, 122, 124 contacting each surface 108, 110 and 112. It is to be understood that a single heater element 120 may be employed as the heat source in the body 62; however, multiple heater elements may be advantageous.

The heater elements 120, 122, 124 may be insert molded in the thermal conductive material as a monolithic or unitary part of the mass 62 so as to substantially maximize heat transfer via conduction from the heater element(s) 120, 122, and/or 124 to the body 62.

As may be seen in Fig. 4, one end of each heater element 120, 122, 124, respectively, projects outwardly through the sidewall of the body 62. The ends of the heater elements 120, 122, 124 each have individual terminals 84 extending therefrom and joined thereto by soldering, welding, etc., for connection to mating sockets or contacts spring mounted on a printed circuit board 100, itself mounted by means of fasteners, i.e., screws, rivets, adhesives, etc., to an exterior surface of the plate 82. Conductive traces in the printed circuit board 100 are connected to sockets or contacts which receive the terminals 84. Two of the connector terminals 78 are soldered to the printed circuit board 100 to receive power, ground and control signals from the vehicle electrical system.

A ground terminal or connection is provided for the exterior sheath of the heater elements 120, 122, 124. One of the terminals 78 includes a depending flange portion of a ground plate which is fixed, such as by welding, to the normally stainless steel exterior sheath of the heater elements 120, 122, 124. The ground plate thus acts as a carrier for the heater elements 120, 122, 124, and maintains the heater elements 120, 122, 124 at the desired lateral spacing.

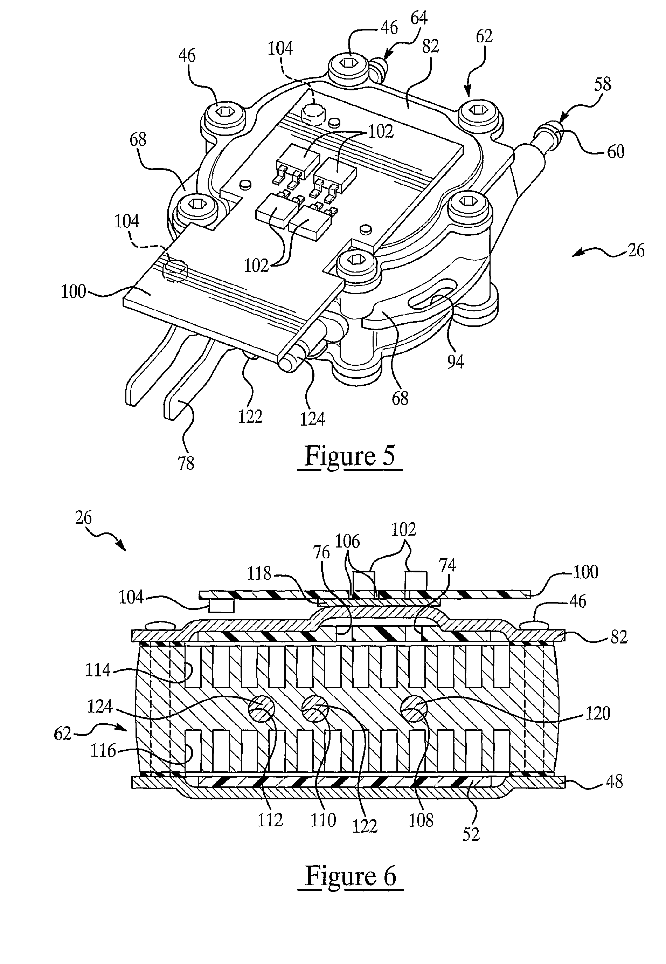

As shown in Figs. 4 and 6, the thermally conductive mass 62 includes a fluid flow channel or path which extends from the inlet 64 to the outlet 58. The fluid flow path is, as a non-limitative example, a labyrinthian path formed of a first fluid flow path portion or channel 114 and a second fluid flow path or channel 116, which are fluidly connected at a generally centrally disposed bore 96. The first fluid flow channel 114 may have a generally spiral shape formed of alternating straight and arcuate sections, which alternately create laminar and turbulent flow of the fluid passing through the first flow channel 114 to substantially maximize the heat absorption of the fluid from the adjacent walls of the mass 62. Further, the first fluid flow channel 114 has an inward directed spiral shape from the inlet 64 to the bore 96 to minimize temperature differential between adjoining portions of the spiral shaped first flow channel 114. The second fluid flow channel 116 may have a substantially identical spiral shape. However, fluid flow through the second fluid flow channel 116 is in an outward spiral direction from the bore 96 to the outlet 58.

Thus, fluid flow through the first and second flow channels 114 and 116 starts from the inlet 64 and then continues in a spirally inward directed manner through the first flow channel 114 to the central passage or bore 96. Upon exiting the central passage 96 into the second flow channel 116, fluid flow progresses in an outward spiral direction through the second flow channel 116 to the outlet 58.

In operation, the heater module 26 will be interconnected in the vehicle washer fluid flow lines between the pump 18 and the spray nozzle(s) 28 as shown in Figs. 2 and 3. The external connector is then connected to the connector housing 78 to provide electric power from the vehicle battery and the control module 16 to the heater elements 120, 122, 124, in the heat exchange body 62.

At the completion of the fluid dispensing operation, and during other periods of non-fluid dispensing while the vehicle engine is running, the control module 16 may cyclically activate one or more of the heater elements, such as heater element 120, to maintain the temperature of the fluid in the first and second flow channels 114 and 116 at an elevated temperature for immediate discharge onto the surface 12 when activated by the switch 14, 14'. This may advantageously minimize electrical power requirements on the vehicle battery.

Although the following description of the use of high amperage switching devices known as MOSFETs, may be used as part of the control module 16 and to provide the necessary high current (typically 50 amps at 12 volts) to the heating elements 120, 122, 124 in the thermal mass 62, other high amperage switching devices may also be used. Any number of MOSFETs 102 may be mounted in any configuration on the printed circuit board 100.

One or more bores 106 may optionally be formed through the printed circuit board 100. The bores 106 may improve heat flow between the switching devices on the printed circuit board (PCB) 100 and the underlying first plate 82.

A suitable temperature sensor 104 is mounted on the printed circuit board 100, typically over or adjacent to the bores 106. The temperature sensor 104 measures the temperature of the printed circuit board 100 and provides a temperature proportional signal to the control module 16, which may be used by the module 16 to control the on/off cycle of the heater elements 120, 122, 124.

To further enhance transfer of the heat generated by the MOSFETs 102 to the first plate 82, a highly conductive pad or plate 118, hereafter referred to as a sill pad 118, may be interposed in contact between the printed circuit board 100 and the first plate 82. The sill pad 118 typically has a planar shape and dimensions to extend over at least a portion of the first plate 82. The pad 118 isolates stray electrical currents to negative ground through the bolts 46, provides a positive contact between the MOSFETs and the thermal mass 62, and stabilizes heat loss through the adjacent cover by maintaining the temperature of the plate 82 at a higher temperature to thereby create a lower temperature differential or gradient with respect to the thermal mass 62.

It is known that during sub-freezing temperatures, washer fluids which are formed substantially of water are subject to freezing. The expansion of the frozen or semi-frozen fluid may cause pressure to be exerted against the surrounding components of the heater module 26, which could lead to leaks and/or potential failure of the heater module 26.

As shown in Fig. 4, one or more fluid expansion means 52 is/are carried in the heater module 26 for reversibly allowing expansion of the fluid in the fluid flow path if the fluid changes phase from a liquid to a substantially solid state. The fluid expansion means, in one embodiment of the present disclosure, may be in the form of a thin, compressive member such as a generally planar member, formed of a closed cell foam.

The fluid expansion member 52 has shape memory so as to return to its normally generally planar shape, substantially completely filling an internal cavity 66 formed in an enlarged bulge in each plate 82 and 48.

Further, the fluid expansion member 52 may have additional features to facilitate its use in the heater module 26. A pair of open ended recesses 54 and 56 may be formed along one edge of the fluid expansion member 52. The recesses 54 and 56 overlay a portion of the underlying fluid flow channel of the thermal conductive mass 62 to permit a small amount of the fluid in the fluid flow channel to flow through the recesses 54 and 56 against the inside surface of the plate 82 or 48. The high power consuming electronic switching devices, such as the MOSFETs 102, are located immediately opposite an enlargement in the plate 82.

The switching devices 102 may be cooled by the flow of water so as to maintain the switching devices 102 at a nominal operating temperature. Additional apertures 74 and 76 may be formed in an intermediate portion of the thermal expansion member 52 for a similar purpose to allow fluid flowing through the channels in the thermal conductive mass 62 to flow against an inner surface of the adjacent plate 82 to remove heat from the switching devices 102 located immediately thereover on the circuit board 100.

An additional open-ended recess 72 may be formed on another edge portion of the thermal expansion member 52. The recess 72 may generally underlie the position of the thermal temperature sensor 104 mounted on the circuit board 100. Fluid flow through the recess 72 may provide a more accurate fluid temperature measurement by the temperature sensor 104 since it is closer to the fluid flowing through the channels in the thermal mass 62.

The system 10, 10' as disclosed in the present embodiment(s) offers many advantages, some of which include, but are not limited to operator-friendly system usage, conservation of washer fluid and/or power, and efficient use of wash cycles based on the then-current need of the surface 12.

While several embodiments have been described in detail, it will be apparent to those skilled in the art that the disclosed embodiments may be modified. Therefore, the foregoing description is to be considered exemplary rather than limiting.

## Claims

1. A selectively controllable heated wash system for a vehicle surface, comprising:
a wiper system control module adapted to be operatively disposed in the vehicle and adapted to receive at least one sensed input; and
a fluid heating module controlled by the wiper system control module, the heating module adapted to heat fluid therein to a preferred temperature, the preferred temperature determined as a result of recognition and analysis of the at least one sensed input.

2. The heated wash system as defined in claim 1 wherein heated fluid is dispensed onto the surface from the heating module according to predetermined parameters determined at least in part as a result of recognition and analysis of the at least one sensed input.

3. The heated wash system as defined in claim 2 wherein the predetermined parameters include at least one of number of fluid dispenses, duration of fluid dispensing, pressure of fluid dispensing, time interval between dispenses, number of wipes, speed of wipes, number of wash/wipe cycles, frequency of wash/wipe cycles, or combinations thereof.

4. The heated wash system as defined in claim 1 wherein the wiper system control module adjusts the preferred temperature of the fluid to substantially minimize loss of dispensed fluid to evaporation.

5. The heated wash system as defined in claim 1 wherein the at least one sensed input is at least one of ambient weather conditions, ambient temperature, ambient humidity, ambient barometric pressure, engine on, battery voltage, vehicle speed, traction control, reservoir fluid level, fluid temperature in the fluid heating module, or combinations thereof, or generated by at least one sensor operatively connected to the vehicle.

6. The heated wash system as defined in claim 2, further comprising an electrical operator input switch operatively connected to the wiper system control module, the switch selectively switchable to an ON state, wherein the control module is adapted to sense duration of the switch in the ON state, and wherein when the wiper system control module senses the duration of the switch in the ON state according to a first predetermined time pattern, fluid is dispensed once onto the surface from the heating module, whereby the system is in a manual wash mode; and wherein when the control module senses the duration of the switch in the ON state according to a second predetermined time pattern distinguishable from the first predetermined time pattern, heated fluid is dispensed onto the vehicle surface according to the predetermined parameters, whereby the system is in an automatic wash mode.

7. The heated wash system as defined in claim 6 wherein when the system is in the manual wash mode, the dispensed fluid is at least one of fluid having a temperature at about the preferred fluid temperature, fluid having a temperature above the preferred fluid temperature, or fluid having a temperature below the preferred fluid temperature.

8. The heated wash system as defined in claim 6 wherein the electrical operator input switch is adapted to be incorporated into a single input switch for the vehicle wash system.

9. The heated wash system as defined in claim 6 wherein the first predetermined time pattern is the switch being in the ON state less than a predetermined amount of time, and the second predetermined time pattern is the switch being in the ON state continuously more than the predetermined amount of time; and wherein during the automatic wash mode, when the control module senses the duration of the switch in the ON state for less than the predetermined amount of time, the system exits the automatic wash mode, and further fluid dispensing is stopped.

10. The heated wash system as defined in claim 2, further comprising an electrical operator input switch operatively connected to the wiper system control module, the switch selectively switchable between: an automatic mode whereby the heated fluid is dispensed onto the vehicle surface according to the predetermined parameters; and a manual mode whereby the operator determines the fluid dispensing.

11. The heated wash system as defined in claim 2 wherein, independently of operator input, the wiper system control module activates or inactivates the heated fluid dispensing onto the vehicle surface according to the predetermined parameters as a result of recognition and analysis of the at least one sensed input.

12. The heated wash system as defined in claim 1, further comprising an operator-alerting signal generated by the wiper system control module a predetermined amount of time before heated fluid dispensing begins.

13. A method for supplying washer fluid to a vehicle surface, comprising substantially minimizing evaporative loss of supplied fluid by adjusting a temperature of the fluid as a result of recognition and analysis of at least one sensed input.

14. The method as defined in claim 13 wherein the adjusting is accomplished by a selectively controllable heated wash system, comprising:
a wiper system control module operatively disposed in the vehicle and adapted to receive the at least one sensed input; and
a fluid heating module controlled by the wiper system control module, the heating module adapted to heat fluid therein to the temperature.

15. The method as defined in claim 14 wherein heated fluid is supplied to the surface from the heating module according to predetermined parameters determined at least in part as a result of recognition and analysis of the at least one sensed input.
